# EUROPÄISCHE PATENTANMELDUNG

(11) **EP 1 293 543 A1**
(43) Veröffentlichungstag der Anmeldung: **19.03.2003**
(21) Anmeldenummer: 02018684.7
(22) Anmeldetag: 21.08.2002
(51) Int. Cl.: C09C 1/58

(54) **Pigmentrusspräparationen**

(30) Priorität: 18.09.2001 DE 10145860
(71) Anmelder: Degussa AG, 40474 Düsseldorf (DE)
(72) Erfinder: Karl, Alfons, Dr., 63584 Gründau (DE)

(57) **Zusammenfassung**

Die Erfindung betrifft perlförmige Pigmentrußpräparationen, die mindestens einen Ruß und mindestens ein Netzmittel enthalten, bei denen die Gesamtperlhärte größer 35 kg, die Einzelperlhärte der 1,4 - 1,7 mm Perlfraktion größer 100 g, der Anteil der Perlen mit Durchmesser ≥ 1 mm größer 50 % und der Wassergehalt größer 2 % ist.

## Beschreibung

Die Erfindung betrifft perlförmige Pigmentrußpräparationen, ein Verfahren zu deren Herstellung und deren Verwendung.

Es ist allgemein üblich, mineralische Bindemittelsysteme mit Pigmentrußpräparationen einzufärben.

Aus DE 197 04 943 sind anorganische Pigmentgranulate bekannt, wobei die Granulate ein oder mehrere anorganische Pigmente und ein oder mehrere wasserlösliche, hydrophile oder hydrophob/hydrophile, bei 25° C flüssige Hilfsmittel oder bei 25° C flüssige Mischungen von wasserlöslichen, hydrophilen oder hydrophob/hydrophilen Hilfsmittel in einer Menge von 0,1 bis 10 Gew.-%, bezogen auf Pigment, enthalten, sowie eine durchschnittliche Teilchengröße von 50 bis 1500 µm, ein Schüttgewicht von 0,3 bis 1,8 g/cm³ und einen Wassergehalt von ≤ 2 Gew.-%, bezogen auf das Pigment aufweisen.

Die bekannten Granulate sind anorganische, kompaktierte Pigmentgranulate mit einem mittleren Durchmesser von 50 bis 1.000 µm, einem Wassergehalt von höchstens 3 Gew.-%, bezogen auf Pigment, und einer Schüttdichte von 0,2 bis 1,8 g/cm³, bestehend aus den entsprechenden technischen, anorganischen Pigmentpulvern und Hilfsmitteln aus den folgenden Gruppen a) bis c)
a) Polyalkylenglykole mit einem Molekulargewicht von < 2000 und Alkylen = Ethylen oder Propylen;
b) Ligninsulfonaten und
c) Celluloseether mit einer Viskosität von < 1000 mPa-s in 2 gew.-%iger wäßriger Lösung bei 20° C,
in einer Menge von 0,1 bis 4 Gew.-% je Hilfsmittel, bezogen auf Pigment, wobei die Gesamtmenge an Hilfsmitteln 0,5 bis 5 Gew.-% nicht übersteigen soll, und wobei mindestens ein Hilfsmittel flüssig ist und aus Gruppe a) stammt und mindestens ein weiteres Hilfsmittel aus Gruppe b) oder c) stammt (DE 197 06 899), bekannt.

Es ist weiterhin ein Verfahren zur Herstellung von anorganischen Pigmentgranulaten und anorganischen Füllstoffgranulaten bekannt, die aus einem oder mehreren Pigmenten oder Füllstoffen und einem oder mehreren anorganischen Bindemitteln bestehen und einen Wassergehalt von nicht mehr als 5 Gew.-% aufweisen und deren Teilchendurchmesser zwischen 100 µm und 2 mm liegt. Sie werden hergestellt, indem man zu einer wäßrigen Pigmentoder Füllstoffsuspension ein Salz als Bindemittel und zusätzlich ein organisches oder metallorganisches Verflüssigungsmittel zufügt und anschließend diese Suspension zu Granulaten aufarbeitet, wobei man das organische Verflüssigungsmittel, beziehungsweise den organischen Anteil im metallorganischen Verflüssigungsmittel thermisch zersetzt, ohne daß organische Reste im Granulat zurückbleiben (DE 196 32 928).

Aus EP 0 802 241 ist ein Verfahren zur Herstellung von Preß- oder Brikettiergranulaten aus Rußpigmenten mit Hilfsmitteln bekannt, bei dem
- ein oder mehrere Rußpigmente mit einem oder mehreren die Verarbeitbarkeit fördernden Hilfsmitteln vermischt werden,
- diese Mischung einem Preß- oder Brikettierschritt unterworfen wird,
- dieses gepreßte oder brikettierte Produkt zerkleinert wird,
- das zerkleinerte Produkt in zwei oder mehrere Fraktionen aufgetrennt wird,
- die Fraktion, in der mindestens 85 % der Teilchen größer 80 µm sind oder zwischen 80 und 2000 µm liegen, als Produkt entnommen wird und gegebenenfalls in einem weiteren Schritt gerundet wird, die andere Fraktion beziehungsweise Fraktionen aus dem Prozeß ausgeschleust oder zurückgeführt werden.

Ein Nachteil der bekannten Pigmentrußpräparationen ist die niedrige Zementfarbstärke.

Es besteht somit die Aufgabe, Pigmentrußpräparationen mit verbesserter Zementfarbstärke herzustellen.

Gegenstand der Erfindung sind perlförmige Pigmentrußpräparationen, die mindestens einen Ruß und mindestens ein Netzmittel enthalten, welche dadurch gekennzeichnet sind, daß die Gesamtperlhärte größer 35 kg, vorzugsweise größer 40 kg, die Einzelperlhärte der 1,4 - 1,7 mm Perlfraktion größer 100 g, vorzugsweise größer 150 g, der Anteil der Perlen mit Durchmesser ≥ 1 mm größer 50 %, vorzugsweise größer 60 %, und der Wassergehalt größer 2 %, vorzugsweise größer 3,0 %, ist.

Der mittlere Teilchendurchmesser kann größer 1 mm, vorzugsweise größer 1,2 mm, sein.

Als Ruße können Flamm-, Gas-, Channel- und Furnaceruße, vorzugsweise Printex® G, Flammruß 101, Printex® 3, Printex® 30, Printex®300 der Firma Degussa AG, eingesetzt werden.

Als Netzmittel können alle nichtionische oder anionische Netzmittel, beispielsweise vernetzte Polyoxyethylenacrylsäure, Fettalkoholoxethylate, Nonylphenolpolyglycolether, Polyvinylpyrolidon, Glycerolfettsäureester, Propylenglykolfettsäureester, Sorbitanfettsäureester, Polyoxyethylensorbitanfettsäureester, Tetraoleinsäurepolyoxyethylensorbitol, Polyoxyethylenalkylether, Polyoxyethylenalkylphenylether, Polyoxyethylenpolyoxypropylenglykol, Polyoxyethylenpolyoxypropylenalkylether, Polyethylenglycolfettsäureester, höhere Fettsäurealkoholester, Polyhydricalkoholfettsäureester, Alkoholalkoxylate, Fettalkoholpolyglykolether, Ligninsulfonate, Alkylphenolpolyglykolether, Naphthalinsulfonsäurederivate, eingesetzt werden. Vorzugsweise kann als Netzmittel ein Natriumsalz eines Polykondensates aus Naphtalinsulfonsäure und Formaldehyd eingesetzt werden. Das Netzmittel kann in einer Menge von 2-20 %, vorzugsweise 3-12 %, bezogen auf das Endprodukt zugegeben werden. Die Schüttdichte kann größer 500 g/l, vorzugsweise größer 550 g/l, sein.

Ein weiterer Gegenstand der Erfindung ist ein Verfahren zur Herstellung der perlförmigen Pigmentrußpräparation, welches dadurch gekennzeichnet ist, daß man Ruß und Netzmittel in einem Ringschichtmischgranulator mischt und anschließend trocknet. Das Netzmittel kann man dem Perlwasser zugeben.

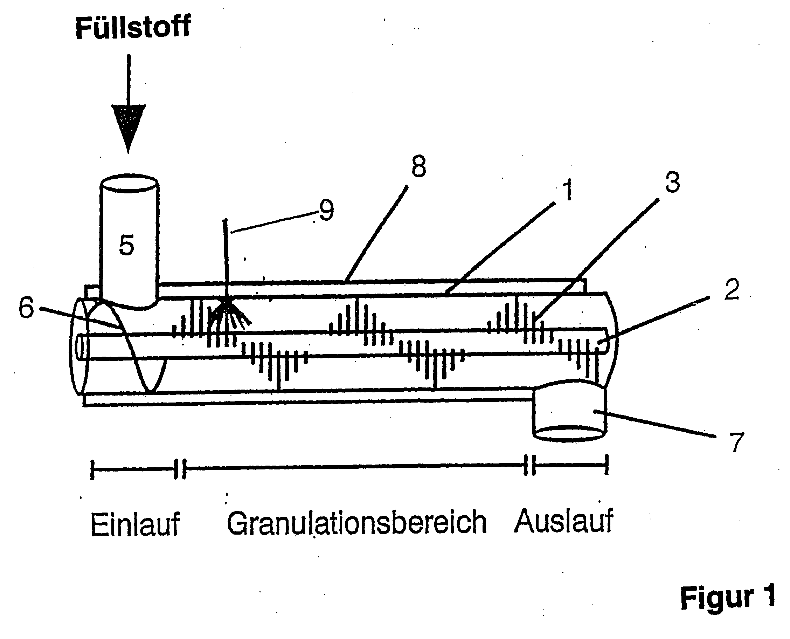

Der Ruß kann mittels einer gravimetrischen Pulverdosierung dem Ringschichtmischgranulator zugeführt und durch eine Stachelwelle zum Ausgang transportiert werden (Figur 1). Das Netzmittel kann man nach einer volumetrischen oder gravimetrischen Dosierung durch eine oder mehrere Düsen an einer oder mehreren Düsenpositionen eindüsen. Die Mischtemperatur kann 60° bis 140°C, vorzugsweise 80° bis 120°C, betragen. Die Drehzahl kann in dem Bereich von 100 bis 1500 UpM, vorzugsweise 100 bis 1000 UpM, variieren. Der Rußdurchsatz kann von 10 bis 150 kg/h, vorzugsweise 20 bis 80 kg/h, variieren. Der Rußdurchsatz für eine Produktionsanlage kann von 0,5 bis 1,5 t/h variieren. Die Umfangsgeschwindigkeit der Stachelspitzen kann zwischen 1 und 30 m/s, vorzugsweise zwischen 10 und 20 m/s, betragen. Die Verweilzeit des Rußes in dem Ringschichtmischgranulator kann zwischen 20 und 600 Sekunden betragen.

Neben der Art der Verdüsung des Netzmittels ist auch der Ort der Verdüsung von wesentlichem Einfluß auf die Qualität der sich bildenden Präparation.

Der Ringschichtmischgranulator besteht aus einem liegend angeordneten, feststehenden Rohr (Stator) mit einer sich darin drehenden Stachelwelle. Der Ringschichtmischgranulator besitzt gewöhnlich einen Einlaufbereich, in dem der Ausgangsruß dem Ringschichtmischgranulator zugeführt wird. In diesem Bereich befindet sich eine Förderschnecke, die dem zugeführten Füllstoff eine Bewegungskomponente in axialer Richtung aufprägt. An den Einlaufbereich schließt sich der eigentliche Perlbereich an, in dem der Füllstoff durch mechanische Einwirkung der sich drehenden Stacheln und durch Abrollen an der Innenwand des Stators agglomeriert. Nach Verlassen des Perlbereiches gelangt der nun schon perlförmige Ruß in den Auslaufbereich und wird aus dem Ringschichtmischgranulator kontinuierlich ausgeschleust.

Je nach Konstruktion des Ringschichtmischgranulators können die einzelnen Bereiche des Ringschichtmischgranulators unterschiedliche Größen aufweisen. In jedem Fall sollten Einlauf- und Auslaufbereich zu Gunsten des Perlbereichs möglichst klein gehalten werden. Nach Eintritt des pulverförmigen Ausgangsfüllstoffes in den Perlbereich beginnt die Agglomeration des Rußes und ist am Ende dieses Bereiches abgeschlossen. Um eine möglichst homogene Verteilung des Netzmittels über den gesamten Querschnitt der Rußperlen zu erhalten, kann es erforderlich sein, das Netzmittel im ersten Drittel des Perlbereiches über den Ruß zu verdüsen. Die Einbringung des Netzmittels in einem späteren Stadium der Perlbildung kann zu einem inhomogenen Aufbau der Rußperlen und damit zu einer verringerten Perlhärte führen.

Eine weitere Verbesserung der Homogenität der Einmischung des Netzmittels in den Ruß kann man erhalten, wenn zur Verdüsung mehrere Sprühdüsen eingesetzt werden, die in einer Ebene senkrecht zur Stachelwelle am Umfang des Stators verteilt sind. Die Zahl der Düsen kann zweckmäßiger Weise auf zwei bis fünf begrenzt werden. Die Düsen können dabei in einer Ebene senkrecht zur Stachelwelle angeordnet werden, um eine gute Homogenität der Einmischung zu gewährleisten.

Durch den geringen Abstand der Stachelspitzen zur Innenwand des Stators können Ablagerungen weitgehendst vermieden werden. Dadurch kann eine homogenere Verteilung des Netzmittels auf dem Füllstoff erfolgen.

Die erfindungsgemäßen perlförmigen Pigmentrußpräparationen können zum Einfärben von Zement, Beton, beispielsweise Mörteln, Estrichen, Terrazzoplatten oder ähnlich dünnflüssigen Systemen, oder Papier verwendet werden.

Vorteile des erfindungsgemäßen Stoffes ist eine bessere Farbstärke im Zement.

Figur 1: Schematische Darstellung des Ringschichtmischgranulators.

Der Aufbau eines Ringschichtmischgranulator ist schematisch in Figur 1 dargestellt. Der Ringschichtmischgranulator besteht aus einem liegend angeordneten feststehenden Rohr 1, dem Stator, und einer darin axial angeordneten sich drehenden Stachelwelle 2 mit den wendelförmig angeordneten Stacheln 3. Zwischen der Stachelwelle 2 und dem Stator 1 befindet sich der Perlraum des Ringschichtmischgranulator. Der Ruß wird dem Granulator am Einlauf 5 zugeführt. Im Bereich des Einlaufs befindet sich auf der Stachelwelle eine Förderschnecke 6, die den Füllstoff in axialer Richtung zum Auslauf 7 fördert. Der Stator 1 ist doppelwandig ausgeführt und erlaubt die Temperierung der Statorwandung mit Hilfe einer Flüssigkeit 8. Im ersten Drittel des Perlbereiches des Stators befinden sich auf seiner Oberseite Durchgangsbohrungen, durch die Sprühdüsen 9 für die Zugabe des Netzmittels eingeführt werden.

### Beispiele:

Als Ausgangsruß wird ein Printex® G, ein Flammruß 101, Printex® 300, Printex® 30 und ein Printex® 3 verwendet (Tabelle 1). Die Ruße sind Handelsprodukte der Degussa AG.

**Tabelle 1**

| | | Printex® G | Flammruß 101 | Printex® 3 | Printex® 30 | Printex® 300 |
|---|---|---|---|---|---|---|
| Jodzahl | mg/g | 37,5 | 33,4 | 88,9 | 85,5 | 89,2 |
| CTAB | m²/g | 37,1 | 18,9 | 82,5 | 74,4 | 84,3 |
| DBP | ml/100g | 93,8 | 112,0 | 121,9 | 105,1 | 68,5 |
| Asche | % | 0,1 | 0,02 | 0,08 | 0,1 | 0,2 |
| Flüchtige 950°C | % | 0,56 | 0,86 | 1,14 | 1,3 | 0,6 |

Die rußanalytischen Kenndaten der Ruße werden nach den folgenden Normen ermittelt:

| | |
|---|---|
| CTAB-Oberfläche: | ASTM D-3765 |
| Jod-Zahl | ASTM D-1510 |
| DBP-Absorption: | ASTM D-2414 |
| Perlabrieb: | ASTM D-1508 |
| Fines | DIN 53583 |
| Asche | DIN 53 586 |
| Flüchtige 950°C | DIN 53 552 |
| Schüttdichte | DIN 53 600 |
| Gesamtperlhärte | ASTM-D-1937 |
| Einzelperlhärte | DIN 53 603 |
| Perlverteilung | ASTM D-1511 |

Die Ausgangsruße werden mit dem in Tabelle 2 dargestellten Einstellparametern verperlt.

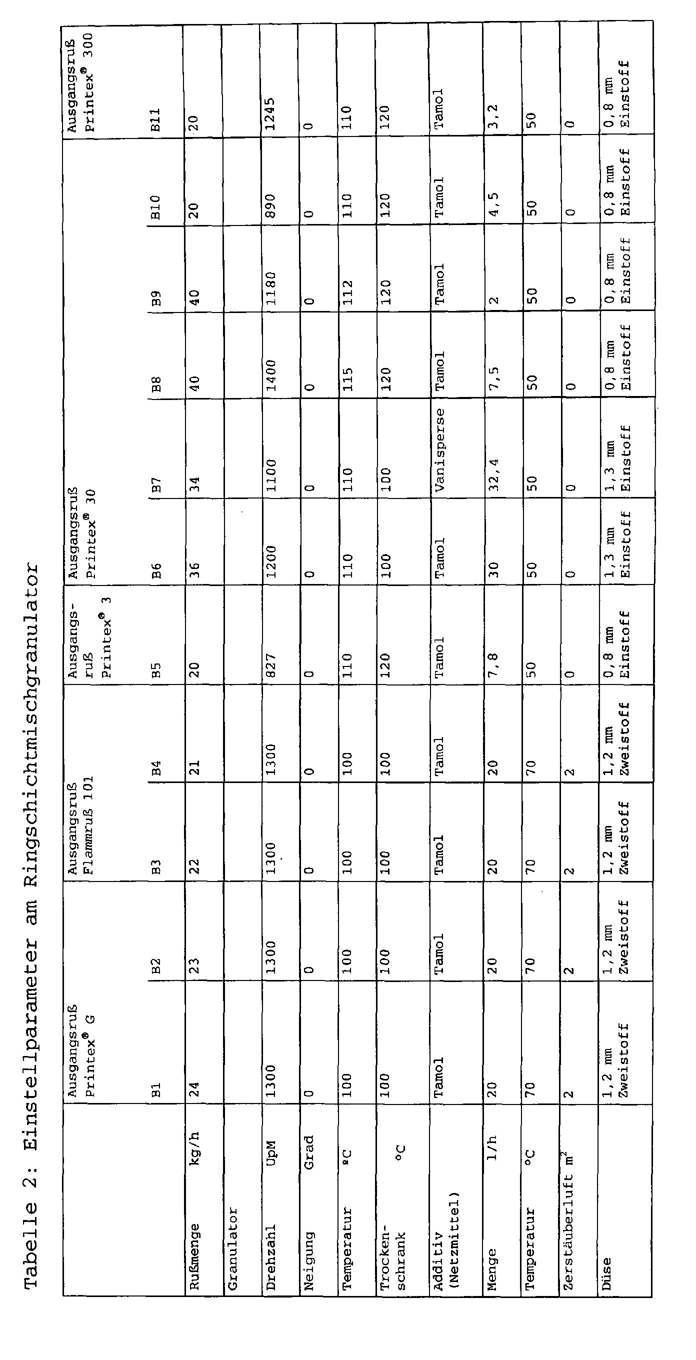

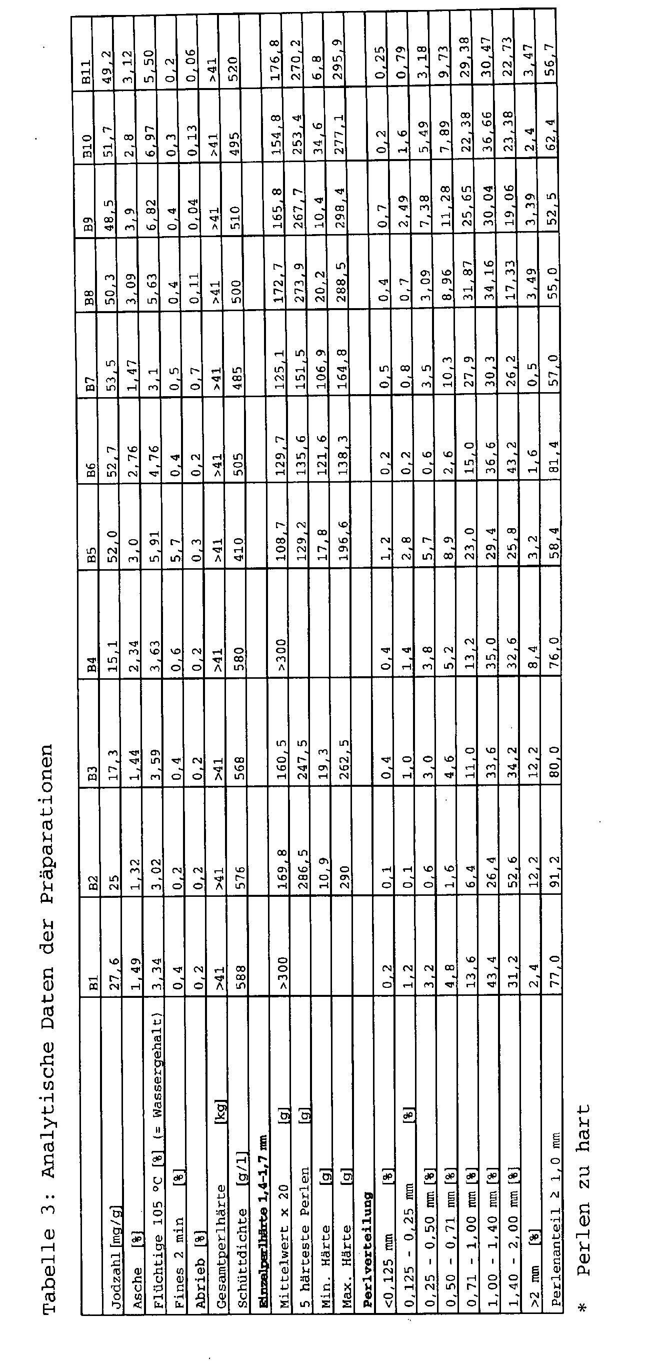

Die analytischen Daten der perlförmigen Pigmentrußpräparationen sind in Tabelle 3 dargestellt.

### Bestimmung der Zementfarbstärke

Die Bestimmung der Zementfarbstärke wird verwendet, um das Potential von Pigmentrußen zur Einfärbung von mineralischen Bindemittelsystemen abschätzen zu können. Hierzu werden Weißzement und Pigmentruß beziehungsweise, Pigmentrußpräparation trocken vorgemischt. Nach der Wasserzugabe wird mit einem einfachen Flügelrührer homogenisiert. Die entstehende Zementpaste wird auf eine Glasplatte aufgetragen und im feuchten Zustand durch die Glasplatte hindurch koloristisch vermessen.

Wie Tabelle 4 zeigt, steigen bei Printex® G (B1) und bei Flammruß 101(B3) durch den Netzmittelzusatz die Zementfarbstärken sehr stark an. Printex® G in Pulver- oder geperlter Form hat eine Zementfarbstärke von ca. 30 %, die netzmittelhaltigen Muster liegen über 500 %, das heißt, der Netzmittelzusatz hat die Farbstärke um den Faktor 17 verbessert oder anders ausgedrückt: Von der Präparation Printex® G / Tamol benötigt man nur 1/17 der Menge, um die gleiche Farbtiefe zu erreichen. Bei Flammruß ist der Effekt nicht so stark ausgeprägt. Die Präparation Flammruß 101 /Tamol liegt um den Faktor 3 besser als die Pulverbeziehungsweise naßgeperlte Form. Beide Präparationen übertreffen Granufin Carbon D in der Zementfarbstärke.

Tabelle 4 zeigt zusätzlich die Betonfarbstärke.

**Tabelle 4:**

| Koloristische Daten | | | |
|---|---|---|---|
| Rußtype beziehungsweise Präparation | Tamol-Gehalt in % | Zement-Farbstärke in % | Beton-Farbstärke in % |
| Corasol® B400 | | 100 | 100 |
| Printex® G fluffy | 0 | 33,0 | 94,9 |
| Printex® G/Tamol® B1 | 4,0 | 541 | 145 |
| Printex® G/Tamol® B2 | 4,2 | 514 | 97,9 |
| Printex® G geperlt | 0 | 29,2 | 96,2 |
| Flammruß 101 fluffy | 0 | 93,0 | 85,5 |
| Flammruß 101 / Tamol® B3 | 4,3 | 302 | 103 |
| Flammruß 101 / Tamol® B4 | 4,5 | 286 | 99,0 |
| Flammruß 101 geperlt | 0 | 115 | 92,7 |
| Granufin® Carbon D | 0 | 260 | 160 |
| Tamol ist ein Netzmittel eines Natriumsalzes eines Polykondensates aus Naphthalinsulfonsäure und Formaldehyd der Firma BASF. | | | |

### Papierherstellung und Einfärbung

Granufin Carbon D ist eine Rußpräparation der Firma Brockhues.

Der Papierherstellung liegt folgende Rezeptur zugrunde:

| | |
|---|---|
| 16,6 g | Zellstoff (30 % Feststoffgehalt) |
| 183,4 g | Wasser. |

Zellstoff und Wasser werden mit dem Dissolver bei 2000 Upm für 5 min gemischt. Danach werden

| | |
|---|---|
| 0,3 g | Rußpräparation |
| 1 g | Harzleim |

zugegeben und wiederum mit dem Dissolver bei 2000 Upm für nur 50 sec gerührt. Die Einmischzeit der Rußpräparation beträgt 50 sec. Die Flockung des Rußes erfolgt durch Zugabe von 1,5 g Aluminiumsulfat (ca. 10%ige Lösung in Wasser).

Im Blattbildner 853 der Firma Frank erfolgt anschließend die Herstellung des in der Masse schwarz eingefärbten Papierblattes.

### Koloristische Beurteilung der hergestellten Papiere

In der Tabelle 5 sind die Ergebnisse der Papiereinfärbungen angegeben. Die optische Dichte kann objektiv mit einem Densitometer bestimmt werden, während die Anzahl der Stippen visuell mit einer Notenskala von 1 bis 6 (1 = keine, 6 = sehr viele) beurteilt wird.

**Tabelle 5:**

| | **Zusammensetzung** | | | |
|---|---|---|---|---|
| | **Pigmentruß** | **Netzmittel** | **Optische Dichte** | **Stippen** |
| B6 | 91% Printex® 30 | 9% Tamol® | 125 | 2-3 |
| B7 | 94% Printex® 30 | 6% Vanisperse | 127 | 4-5 |
| B8 | 91% Printex® 30 | 9% Tamol® | 110 | 5-6 |
| B9 | 91% Printex® 30 | 12% Tamol® | 118 | 3 |
| B10 | 91% Printex® 30 | 9% Tamol® | 116 | 4-5 |
| B5 | 91% Printex® 3 | 9% Tamol® | 122 | 2 |
| B11 | 91% Printex® 300 | 9% Tamol® | 77 | 6 |
| Printex® 3 stellt das Optimum bezüglich Dispergierbarkeit dar, während Printex® 30 in der optischen Dichte tendenziell besser liegt. | | | | |

Vanisperse ergibt eine höhere optische Dichte. Tamol dagegen liefert weniger Stippen.

Eine Erhöhung des Netzmittelgehaltes bringt keine Dispergiervorteile.

Eine Verschiebung des Perlmaximums zu größeren Perldurchmesern wirkt sich positiv aus.

## Patentansprüche

1. Perlförmige Pigmentrußpräparationen, die mindestens einen Ruß und mindestens ein Netzmittel enthalten,
**dadurch gekennzeichnet,**
**daß** die Gesamtperlhärte größer 35 kg, die Einzelperlhärte der 1,4 - 1,7 mm Perlfraktion größer 100 g, der Anteil der Perlen mit Durchmesser ≥ 1 mm größer 50 % und der Wassergehalt größer 2 % ist.

2. Perlförmige Pigmentrußpräparationen nach Anspruch 1,
**dadurch gekennzeichnet,**
**daß** als Netzmittel ein Natriumsalz eines Polykondensates aus Naphthalinsulfonsäure und Formaldehyd eingesetzt wird.

3. Perlförmigen Pigmentrußpräparationen nach Anspruch 1,
**dadurch gekennzeichnet,**
**daß** als Ruß Printex® G, Flammruß 101, Printex® 3, Printex® 30 oder Printex® 300 verwendet wird.

4. Verfahren zur Herstellung von perlförmigen Pigmentrußpräparationen nach Anspruch 1,
**dadurch gekennzeichnet,**
**daß** man Ruß und Netzmittel in einem Ringschichtmischgranulator mischt und anschließend trocknet.

5. Verfahren zur Herstellung von perlförmigen Pigmentrußpräparationen nach Anspruch 4,
**dadurch gekennzeichnet,**
**daß** man das Netzmittel dem Perlwasser zugibt.

6. Verfahren zur Herstellung von perlförmigen Pigmentrußpräpartionen nach Anspruch 4,
**dadurch gekennzeichnet,**
**daß** man zur Verdüsung mehrere Sprühdüsen einsetzt, die in einer Ebene senkrecht zur Stachelwelle am Umfang des Stators verteilt sind.

7. Verwendung der perlförmigen Pigmentrußpräparationen nach Anspruch 1 zum Einfärben von Zement, Beton und Papier.
